# DEMANDE DE BREVET EUROPEEN

(11) **EP 1 593 623 A1**
(43) Date de publication de la demande: **09.11.2005**
(21) Numéro de dépôt: 05290877.9
(22) Date de dépôt: 20.04.2005
(51) Int. Cl.: B65G 69/18

(54) **Procédé permettant le chargement et/ou le déchargement de substances pulvérulentes et dispositif mettant en oeuvre un tel procédé**

(30) Priorité: 07.05.2004 FR 0404925
(71) Demandeur: GIAT Industries, 78000 Versailles (FR)
(72) Inventeur: Brion, Bernard, 18000 Bourges (FR); Heinis, Philippe, 18000 Bourges (FR)
(74) Mandataire: Célanie, Christian

(57) **Abrégé**

L'invention a pour objet un procédé ainsi qu'un dispositif permettant le chargement et/ou le déchargement sécurisé de substances pulvérulentes dans ou à partir d'une aire de stockage. Le dispositif comporte au moins un caisson (2) positionné au-dessus d'un moyen de transport (3) de la substance pulvérulente, caisson (2) comprenant un moyen de pulvérisation (11) d'un fluide permettant l'abattage des poussières.

Application aux opérations de chargement ou déchargement de céréales dans les silos.

## Description

Le domaine technique de l'invention est celui des procédés et dispositifs permettant de limiter le dégagement de poussières dans les zones de transfert de céréales en vrac, par exemple aux entrées et sorties des silos.

En effet les nuages de poussières qui sont engendrés lors de ces transferts forment une atmosphère potentiellement explosible dans laquelle il est dangereux de faire pénétrer une source d'ignition comme un camion dont le moteur est en route.

Il est connu par le brevet FR2787428 un embout d'évacuation de produit en vrac incorporant un carter doté d'un dispositif de pulvérisation permettant d'humecter le produit en vrac. Ce dispositif est lié à un silo ou à un embout de remplissage. Cependant ce dispositif ne permet pas de limiter le dégagement de poussières lors du vidage d'une benne de camion de transport à l'entrée d'un silo.

Le brevet FR2833860 propose par ailleurs un dispositif d'abattage de particules en suspension dans un local clos ou partiellement clos. Ce dispositif comprend des buses dispersant des gouttelettes de liquide assurant l'abattage des particules de poussière. Si ce dispositif est bien adapté à un local fermé tel un silo, il n'est pas transposable à un espace ouvert dans lequel pénètre un camion benne, notamment dans les silos dits horizontaux.

C'est le but de l'invention que de proposer un procédé et un dispositif permettant de pallier de tels inconvénients.

Ainsi le procédé et le dispositif selon l'invention permettent d'assurer de façon efficace l'abattage de poussières dans les zones de transfert des matériaux pulvérulents, zones ouvertes et non confinées à l'intérieur desquelles les véhicules peuvent alors pénétrer sans risques.

Cet abattage est par ailleurs assuré en mettant en oeuvre une quantité de fluide ou d'énergie réduite et sans humidifier de façon excessive le matériau déchargé.

Ainsi l'invention a pour objet un procédé permettant le chargement et/ou le déchargement sécurisé de substances pulvérulentes dans ou à partir d'une aire de stockage, procédé caractérisé en ce que l'on procède au niveau d'au moins une zone de l'aire de stockage à la pulvérisation de gouttelettes d'un fluide permettant l'abattage des poussières engendrées par le déchargement et/ou le chargement.

L'invention a également pour objet un dispositif de chargement et/ou de déchargement sécurisé de substances pulvérulentes mettant en oeuvre un tel procédé, dispositif caractérisé en ce qu'il comporte au moins un caisson positionné au-dessus d'un moyen de transport de la substance pulvérulente, caisson comprenant un moyen de pulvérisation d'un fluide permettant l'abattage des poussières.

Selon une caractéristique, le caisson comportera une ouverture autorisant le passage d'un véhicule de chargement ou déchargement

Le caisson pourra comporter au moins trois parois verticales fixes.

Le caisson pourra également comporter au moins deux parois articulées disposées de part et d'autre de l'ouverture et pouvant être appliquées contre le véhicule.

Selon un mode de réalisation, les parois pourront être réalisées en un matériau souple fixé à une ossature.

Selon une autre caractéristique de l'invention, le dispositif pourra comporter un moyen fermant partiellement l'ouverture et disposé au niveau du sol.

Avantageusement, le moyen de pulvérisation pourra comporter au moins trois buses disposées dans au moins un plan horizontal, buses reliées à un moyen d'alimentation et assurant un mélange en air et en eau.

Selon un mode de réalisation, toutes les buses pourront être disposées au niveau d'une paroi de fond du caisson et orientées sensiblement vers l'ouverture.

Selon un autre mode de réalisation, le dispositif pourra comprendre au moins une buse au niveau de chaque paroi latérale et au moins trois buses au niveau de la paroi de fond du caisson.

Avantageusement, les buses pourront être disposées à une distance du sol comprise entre 2 m et 3 m.

Selon une variante, le dispositif pourra comporter un moyen permettant d'asservir le moyen de pulvérisation à une mesure du taux d'humidité et/ou du taux de poussière au niveau de la zone d'abattage.

L'invention sera mieux comprise à la lecture de la description qui va suivre de modes particuliers de réalisation, description faite en référence aux dessins annexés et dans lesquels :
- la figure 1a montre en vue latérale un véhicule positionné par rapport à un dispositif selon un premier mode de réalisation de l'invention,
- la figure 1b montre une vue de dessus de ce dispositif,
- la figure 1c est une vue en perspective de ce premier mode de réalisation du caisson,
- les figures 2a et 2b montrent en vue latérale et de dessus un véhicule positionné par rapport à un dispositif selon un deuxième mode de réalisation de l'invention, .
- la figure 2c est une vue en perspective de ce deuxième mode de réalisation du caisson.

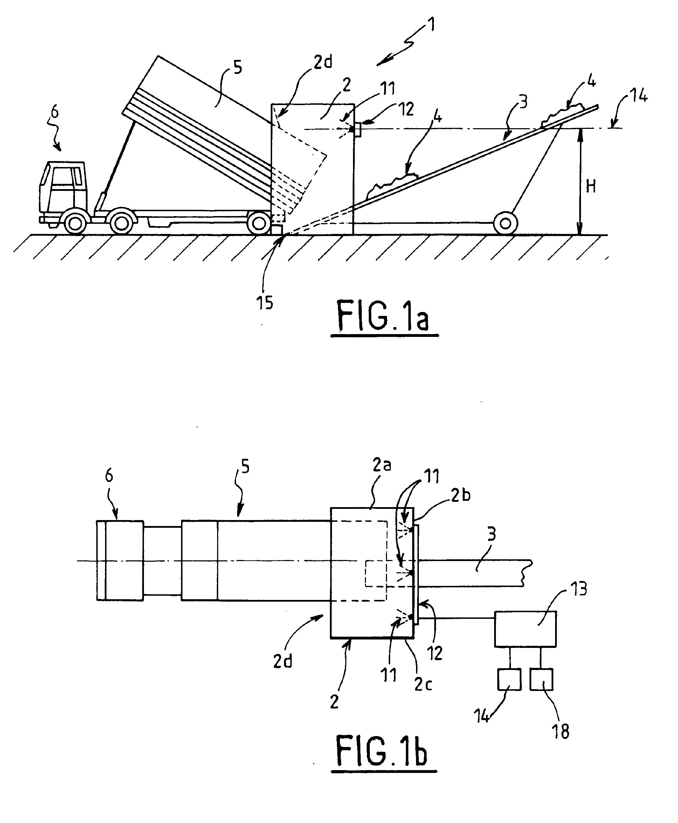

En se reportant aux figures 1a et 1b, un dispositif de chargement et/ou de déchargement selon l'invention comprend un caisson 2 qui est positionné au-dessus d'un moyen de transport 3 de la substance pulvérulente 4.

Le moyen de transport 3 est constitué ici par un tapis roulant amovible qui est amené au-dessous de la benne 5 d'un véhicule 6. Ce tapis 3 conduit la substance pulvérulente (par exemple des grains de céréales) vers une zone de stockage (non représentée).

La figure 1c montre en perspective un mode de réalisation du caisson 2.

Le caisson 2 est formé par une ossature rigide 7 sur laquelle sont fixées des parois 2a,2b,2c,2d réalisées en un matériau souple, par exemple en matière plastique qui pourra être transparente pour faciliter le contrôle du chargement ou déchargement.

Les parois souples pourront être formées par exemple par la juxtaposition de bandes rectangulaires 8 fixées à l'ossature 7 au niveau du cadre supérieur de cette dernière. On pourrait également réaliser les faces 2a,2b,2c sous la forme de panneaux en matière plastique, rigides ou non.

Le caisson 2 est ainsi extrêmement léger et peut être facilement mis en place ou retiré de la zone de chargement ou déchargement.

On pourra avantageusement doter l'ossature de roulettes pour faciliter sa mise en place. Les dimensions de ce caisson sont sensiblement : hauteur 3,5m, profondeur : 3m, largeur 3,5m.

On pourra également prévoir des charnières sur l'ossature 7 de façon à permettre le pliage des parois 2a,2b,2c du caisson.

La face supérieure du caisson 2 est ouverte de façon à faciliter l'évacuation de la vapeur d'eau qui sera dispersée par le dispositif. La face arrière comporte une échancrure 17 (figure 1c) permettant le passage du tapis roulant 4.

La face avant 2d comporte une ouverture 9 autorisant le passage de la partie arrière du véhicule 6 et en particulier de la benne 5.

La face avant pourra (comme figuré ici) comporter une paroi réduite 2d disposée au-dessus de l'ouverture 9. Cette paroi réduite sera formée de bandes souples juxtaposées 10. Ces bandes 10 autoriseront le passage et l'inclinaison de la benne 5 du véhicule (voir figure la).

Conformément à l'invention le caisson 2 porte un moyen de pulvérisation d'un fluide permettant l'abattage des poussières.

Ce moyen est constitué par des buses 11 qui sont fixées à un rail 12 solidaire de l'ossature 7 du caisson 2. Les buses sont reliées à un moyen d'alimentation qui comprend un boîtier de réglage 13, raccordé à un compresseur 18 ainsi qu'au réseau hydraulique 14 (ou bien à un réservoir d'eau).

Le compresseur fournit de l'air comprimé permettant l'atomisation du fluide sous forme de gouttelettes extrêmement fines (taille des gouttelettes du même ordre que la taille des grains de poussière, soit d'environ 10 micro mètres de diamètre). Le boîtier 13 permet de régler les débits d'eau et d'air. Chaque buse 11 reçoit du boîtier 13 une alimentation en eau et une alimentation en air séparées. Le mélange eau / air comprimé est réalisé au niveau de chaque buse 11 qui engendre ainsi un brouillard de gouttelettes d'eau. De telles buses sont connues notamment du brevet FR2833860.

Suivant le mode de réalisation qui est décrit ici, les buses sont fixées exclusivement sur la paroi de fond 2b du caisson 2. Elles sont toutes disposées dans un plan horizontal 14 disposé à une distance H du sol comprise entre 2 m et 3 m. Les buses sont toutes orientées vers l'ouverture 9 du caisson 2, donc vers la benne 5 du véhicule 6.

Par ailleurs le dispositif 1 comporte un moyen fermant partiellement l'ouverture 9 et disposé au niveau du sol.

Ce moyen est constitué par un seuil 15 qui pourra être formé, soit par un panneau métallique solidaire du caisson 2, soit par un muret lié au sol et contre lequel on positionnera le caisson 2. Ce moyen permet d'éviter que la poussière rabattue par le dispositif s'accumule sous le véhicule. Il facilite le nettoyage ultérieur de la zone de déchargement.

D'une façon classique on pourra prévoir une fosse en dessous du tapis roulant 3 au niveau de la zone de déchargement. Cette fosse (non représentée ici) permettra de faciliter la collecte des grains déversés par la benne 5. La fosse sera entourée par le caisson 2.

Suivant le procédé proposé par l'invention on procède, au niveau de la zone de déversement du matériau pulvérulent, à la pulvérisation de gouttelettes d'un fluide permettant l'abattage des poussières engendrées par le déchargement. Ce fluide est constitué par de l'eau. On pourrait également mélanger à l'eau un agent conservateur ou un agent de traitement phyto-sanitaire (fongicide par exemple) .

Des essais ont été conduits en faisant varier le nombre et la localisation des buses 11 sur le caisson 2.

On a pu vérifier que l'abattage des poussières pouvait être assuré d'une façon efficace par quelques buses 11 uniquement (3 à 5 maximum) positionnées uniquement au niveau de la paroi de fond 2b du caisson. Ces buses sont orientées de façon à diriger les gouttelettes dans un plan sensiblement horizontal et en direction de la benne 5 du camion.

On a ainsi obtenu une efficacité maximale de l'abattage de poussière avec trois buses disposées au niveau de la paroi de fond 2b. Toute la poussière produite par le déchargement a été abattue avec une consommation de 15 litres d'eau par heure. On a pu noter qu'un nombre de buse deux fois plus important (6 buses : 4 sur la paroi de fond et une sur chaque paroi latérale) consommait deux fois plus d'eau et d'énergie tout en abattant 6 à 7 fois moins de poussière (masse surfacique de poussière abattue mesurée : 51,4 g /m² contre 348,8 g/m² pour la configuration à 3 buses).

Les gouttelettes formées par les buses permettent en effet de former une "nappe de brouillard" qui est maintenue en place grâce au caisson 2. Grâce à la disposition appropriée des buses 11, cette nappe est située au-dessus de l'ouverture de la benne 5 déversant le chargement. Elle empêche donc la remontée de la poussière et sa sortie hors du caisson 2. La poussière se fixe aux gouttelettes d'eau et elle retombe au sol..

Le faible nombre de buses permet donc de limiter la consommation en eau et en air comprimé, donc également la puissance requise. Le nuage de gouttelettes reste de dimensions modestes et il est confiné en partie par le caisson 2 et ne perturbe donc pas l'activité autour de la zone de déchargement.

La poussière abattue est poussée vers le véhicule 6 par les buses. Le seuil 15 permet de retenir cette poussière et d'éviter qu'elle ne s'accumule sous le véhicule. On facilite ainsi le nettoyage ultérieur de la zone de déchargement.

Différentes variantes sont possibles sans sortir du cadre de l'invention.

Il est ainsi possible de réaliser le seuil 15 sous la forme d'un panneau rigide solidaire du caisson, ou bien sous la forme d'un panneau souple enroulé sur un tambour et dont une extrémité supérieure pourra être accrochée à l'ossature du caisson à différentes hauteurs. Dans ce dernier cas il sera possible alors de régler la hauteur du seuil en fonction de la taille du véhicule venant décharger.

On pourrait aussi réaliser un panneau souple fixé à sa partie supérieure par un lien élastique solidaire de l'ossature du caisson. Ce panneau pourra être déformé par la benne lors de son basculement.

Ces deux dernières variantes permettent de définir un seuil venant en contact avec la partie basse de la benne donc améliorant le maintien de la poussière abattue à l'intérieur du caisson 2.

La consommation d'eau et d'air restant modeste, il est possible de définir un caisson 2 comportant, intégré à sa base, le compresseur 14, une réserve d'eau 18 et le boîtier de réglage 13.

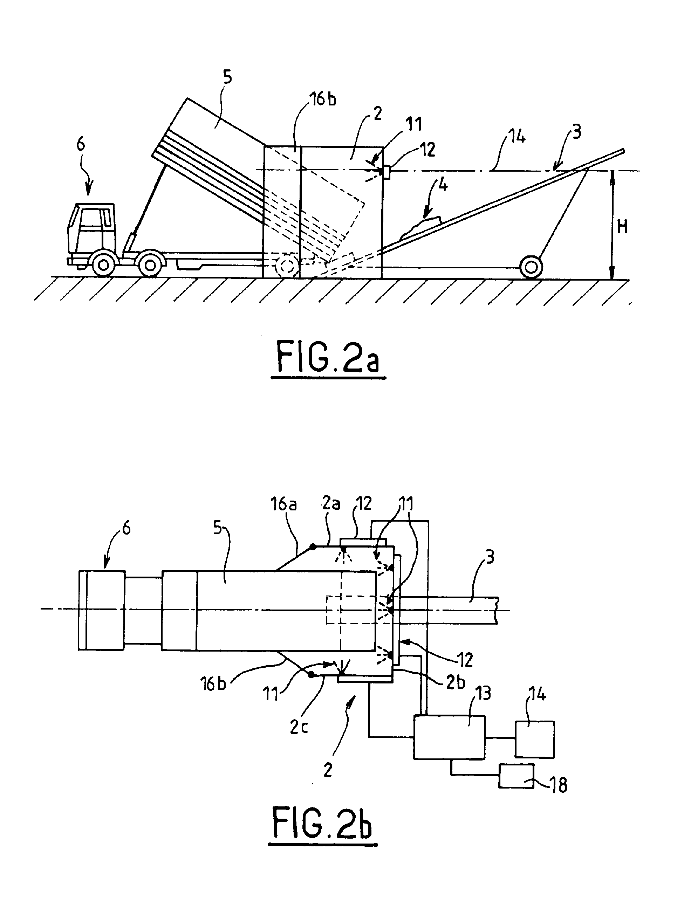

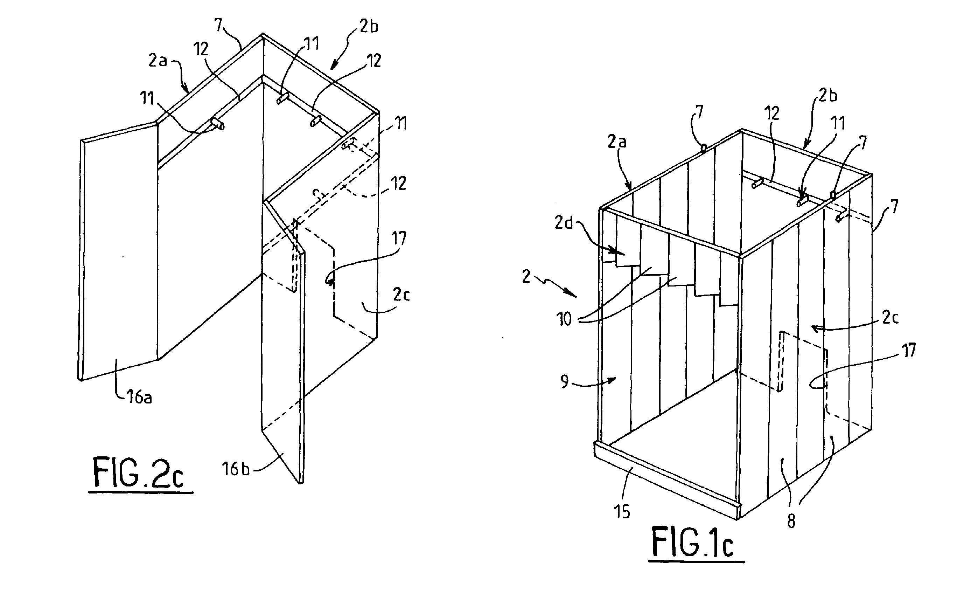

Un autre mode de réalisation de l'invention est représenté aux figures 2a, 2b et 2c.

Ce mode diffère du précédent en ce qu'il comporte deux parois 16a et 16b disposées de part et d'autre de l'ouverture 9 et articulées sur l'ossature 7 du caisson 2. Il n'y a donc pas ici de paroi réduite 2d.

Par ailleurs les parois 2a, 2b, 2c, 16a et 16b sont formés de panneaux rectangulaires en matière plastique transparente, panneaux qui ne sont pas divisés en bandes mais formés chacun d'une seule pièce.

Comme les parois 2a,2b et 2c, les parois 16a,16b sont constituées par des panneaux souples fixés à une armature rigide reliée à l'ossature 7. Elles sont ouvertes pour faciliter l'entrée de l'arrière du véhicule 6 dans le caisson 2 puis elles sont rabattues vers le véhicule de façon à assurer une fermeture de la zone délimitée par le caisson et cela quelles que soient les dimensions du véhicule 6 et de sa benne 5.

Par ailleurs ce mode de réalisation associe trois buses 11 fixées au niveau de la paroi de fond 2b du caisson 2 et une buse fixée au niveau de chaque paroi latérale 2a, 2c. La fixation des buses se fera par exemple au moyen de rails 12 solidaires de l'ossature 7 du caisson 2.

Toutes les buses sont reliées comme précédemment à un boîtier de réglage 13 qui est raccordé à un compresseur 18 ainsi qu'au réseau hydraulique 14 (ou bien un réservoir d'eau) .

Les buses liées aux parois latérales ont pour effet d'assurer une homogénéisation de la répartition de la poussière abattue dans le caisson. Il est alors possible de ne pas prévoir de seuil 15, la poussière abattue restant à l'intérieur du caisson.

Différentes variantes sont possibles sans sortir du cadre de l'invention.

Il est ainsi possible d'associer la répartition de buses décrite en référence aux figures 1a à 1c avec la structure de caisson décrite en référence aux figures 2b,2c (et inversement).

On pourra également dans l'une ou l'autre configuration asservir la diffusion de gouttelettes à une mesure de la concentration en poussière au-dessus de la zone de déchargement ou bien à une mesure du taux d'humidité au-dessus de la dite zone. Cette mesure sera effectuée avec un capteur approprié relié à un boîtier électronique qui comportera des moyens de traitement du signal ainsi que des moyens mémoires programmables permettant de définir les seuils minimum d'humidité et/ou de taux de poussière à partir desquels la diffusion des gouttelettes de fluide sera provoquée.

On a décrit ici l'invention dans une application à une zone de déchargement. Il est bien entendu possible de la mettre en oeuvre au niveau d'une zone de chargement d'un véhicule.

Dans ce cas on aura encore un caisson entourant la zone de chargement et comportant des buses assurant l'abattage des poussières engendrées par l'opération.

On utilisera avantageusement l'invention pour les opérations de chargement ou déchargement des céréales. Mais on pourrait la mettre en oeuvre pour les opérations de chargement et déchargement d'autres matériaux pulvérulents tels que : sciure de bois, charbon...

## Revendications

1. Procédé permettant le chargement et/ou le déchargement sécurisé de substances pulvérulentes dans ou à partir d'une aire de stockage, procédé ***caractérisé en ce que*** l'on procède au niveau d'au moins une zone de l'aire de stockage à la pulvérisation de gouttelettes d'un fluide permettant l'abattage des poussières engendrées par le déchargement et/ou le chargement.

2. Dispositif de chargement et/ou de déchargement sécurisé de substances pulvérulentes mettant en oeuvre le procédé selon la revendication 1, dispositif **caractérisé en ce qu'**il comporte au moins un caisson (2) positionné au-dessus d'un moyen de transport (3) de la substance pulvérulente (4), caisson comprenant un moyen de pulvérisation (11) d'un fluide permettant l'abattage des poussières.

3. Dispositif de chargement et/ou de déchargement selon la revendication 2 **caractérisé en ce que** le caisson (2) comporte une ouverture (9) autorisant le passage d'un véhicule (6) de déchargement

4. Dispositif de chargement et/ou de déchargement selon la revendication 3, **caractérisé en ce que** le caisson (2) comporte au moins trois parois verticales fixes (2a, 2b, 2c, 2d) .

5. Dispositif de chargement et/ou de déchargement selon une des revendications 3 ou 4, **caractérisé en ce que** le caisson comporte au moins deux parois articulées (16a,16b) disposées de part et d'autre de l'ouverture (9) et pouvant être appliquées contre le véhicule (6).

6. Dispositif de chargement et/ou de déchargement selon une des revendications 3 à 5, **caractérisé en ce que** les parois (2a,2b,2c,2d) sont réalisées en un matériau souple fixé à une ossature (7).

7. Dispositif de chargement et/ou de déchargement selon une des revendications 2 à 6, **caractérisé en ce qu'**il comporte un moyen (15) fermant partiellement l'ouverture (9) et disposé au niveau du sol.

8. Dispositif de chargement et/ou de déchargement selon une des revendications 2 à 7, **caractérisé en ce que** le moyen de pulvérisation comporte au moins trois buses (11) disposées dans au moins un plan horizontal (14), buses reliées à un moyen d'alimentation (13,14,18) et assurant un mélange en air et en eau.

9. Dispositif de chargement et/ou de déchargement selon la revendication 8, **caractérisé en ce que** toutes les buses (11) sont disposées au niveau d'une paroi de fond (2b) du caisson et orientées sensiblement vers l'ouverture (9).

10. Dispositif de chargement et/ou de déchargement selon la revendication 8, **caractérisé en ce qu'**il comprend au moins une buse (11) au niveau de chaque paroi latérale (2a,2c) et au moins trois buses (11) au niveau de la paroi de fond (2b) du caisson.

11. Dispositif de chargement et/ou de déchargement selon une des revendications 9 ou 10, **caractérisé en ce que** les buses (11) sont disposées à une distance du sol comprise entre 2 m et 3 m.

12. Dispositif de chargement et/ou de déchargement selon une des revendications 2 à 11, **caractérisé en ce qu'**il comporte un moyen permettant d'asservir le moyen de pulvérisation à une mesure du taux d'humidité et/ou du taux de poussière au niveau de la zone d'abattage.
